# EUROPEAN PATENT SPECIFICATION

(11) **EP 3 233 998 B1**
(45) Date of publication and mention of the grant of the patent: **30.01.2019**
(21) Application number: 15820924.7
(22) Date of filing: 07.12.2015
(51) Int. Cl.: C08K 5/095, C08L 39/08, G02B 5/30, G02F 1/13363, C08J 5/18

(54) **POLYMERIC MATERIALS WITH NEGATIVE PHOTOELASTIC CONSTANTS**
POLYMERMATERIALIEN MIT NEGATIVEN FOTOELASTISCHEN KONSTANTEN
MATÉRIAUX POLYMÈRES DOTÉS DE CONSTANTES PHOTOÉLASTIQUES NÉGATIVES

(30) Priority: 18.12.2014 US 201462093573 P
(43) Date of publication of application: 25.10.2017
(73) Proprietor: Rohm and Haas Electronic Materials LLC, Marlborough, MA 01752 (US); Dow Global Technologies LLC, Midland, MI 48674 (US)
(72) Inventor: CHANG, Shih-Wei, Marlborough, MA 01752 (US); O'CONNELL, Kathleen M., Marlborough, MA 01752 (US); WOELFLE-GUPTA, Caroline, Freeport, TX 77541 (US); ZHOU, Weijun, Freeport, TX 77541 (US)
(74) Representative: Houghton, Mark Phillip
(86) International application number: PCT/US2015/064205
(87) International publication number: WO 2016/099973

(56) References cited:
- US-A1- 2004 201 805
- US-A1- 2009 247 739
- US-A1- 2010 291 376
- HOURAN SHAFIEE ET AL: "The effect of trans-stilbene unit in the compensation of birefringence of poly(methyl methacrylate) in the random copolymerization method and anisotropic molecule dopant method", PROCEEDINGS OF SPIE, vol. 7599, 11 February 2010 (2010-02-11), pages 75990U-75990U-6, XP055248588, US ISSN: 0277-786X, DOI: 10.1117/12.848869 ISBN: 978-1-62841-730-2 cited in the application

## Description

### FIELD OF THE INVENTION

The present invention relates to a polymer composition having a negative photoelastic constant

### BACKGROUND OF THE INVENTION

An LCD device comprises an LC (liquid crystal) cell formed by arranging a pair of transparent substrates where transparent electrodes are provided so as to face each other, followed by enclosing liquid crystals between the pair of substrates. LCD devices have been widely used in portable telephones, portable information terminals, etc., where enhancement of luminance and improvement of image display quality are desired, as well as making the LCD device lighter and thinner. LCD devices such as smart phones and tablet computers are prone to light leakage, especially around corners and edges, when those devices are used in completely dark state. One important contributing cause is suspected to be stress induced birefringence in the thin glass of the LC cell. Portions of a liquid crystal display can experience stresses due to mounting structures that are attached to the display or due to internal display structures. Glass in general has a positive photoelastic constant, or Cp. Therefore to compensate for stress-induced birefringence of the glass substrates, a material with a negative Cp value is needed as a compensation film. Use of small molecules such as trans-stilbene as a dopant in polymeric materials, e.g., poly(methyl methacrylate), to alter Cp has been disclosed in H. Shafiee, et al., Proc. SPIE, 2010, vol. 7599, 75990U. However, this reference teaches only a positive change in Cp.

### SUMMARY OF THE INVENTION

The present invention provides doped poly(2-vinylpyridine) (P2VP). The doped P2VP comprises 2 to 30 wt% of a dopant which is defined in claim 1.

The present invention further provides doped poly(2-vinylpyridine) (P2VP) which comprises 2 to 30 wt% of a dopant of formula (II) 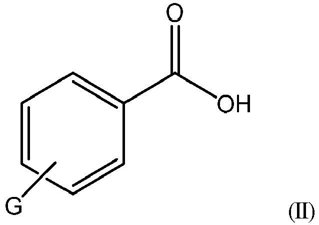 wherein G represents 1-5 substituents selected from the group consisting of fluoro and chloro.

### DETAILED DESCRIPTION OF THE DISCLOSURE

Percentages are weight percentages (wt%) and temperatures are in °C, unless specified otherwise. Operations were performed at room temperature (20-25 °C), unless specified otherwise. As used herein, the term "poly(2-vinylpyridine)" means a polymer or copolymer comprising at least 50 wt% polymerized units of 2-vinylpyridine, preferably at least 60 wt%, preferably at least 70 wt%, preferably at least 80 wt%, preferably at least 90 wt%, preferably at least 95 wt%, preferably at least 98 wt%.

The photo-elastic effect induced birefringence is determined by the photo-elastic constant of the material (Cp) and the amount of stress applied to the material (σ). The photo-elastic constant is determined by calculating the ratio of stress-induced birefringence and the magnitude of the applied stress onto the glassy material under the condition that the applied stress only induces a small degree of elastic deformation in the material. Photo-elastic birefringence of a material is different from intrinsic birefringence (Δn₀) of that material. Intrinsic birefringence refers to the amount of birefringence a material exhibits when it is fully oriented in one direction, for example, by uniaxially stretching the material in one direction. Materials of positive intrinsic birefringence have a refractive index in the x-direction (nₓ), along which the material is fully oriented, larger than the refractive indices n_{y} and n_{z} in the other two directions, y and z, where x, y, z represent three distinct directions that are mutually orthogonal to each other. Conversely, materials of negative intrinsic birefringence have a refractive index in the x-direction, along which the material is fully oriented, smaller than the refractive indices in the other two directions, y and z. Materials of positive intrinsic birefringence type always tend to be of the positive photo-elastic type, whereas for materials of negative birefringence type, they may be either of negative photo-elasticity type or positive photo-elasticity type.

The photo-elastic constant is an intrinsic property of each material and may have a positive or negative value. Thus, materials are divided into two groups: a group having a positive photo-elastic constant and the other group having a negative photo-elastic constant. Materials with a positive photo-elastic constant tend to exhibit positive birefringence (i.e., nx > ny) when the material in subject to small degree of uni-axial tensile stress along the x-direction. Conversely, materials with a negative photo-elastic constant will exhibit negative birefringence (i.e., nx <ny) when the material is subject to a small degree of uni-axial tensile stress along the x-direction.

Retardation is a measure of birefringence in a sheet of material. It is defined as the product of Δn and the thickness of the sheet, where Δn is the absolute value of the difference between nₓ and n_{y}.

Preferably, the C₉-C₂₅ aliphatic polycyclic compound contains only carbon, hydrogen and oxygen atoms; preferably no more than six oxygen atoms, preferably no more than four. Preferably, the C₉-C₂₅ aliphatic polycyclic compound is a bridged polycyclic compound; preferably a bicyclic, tricyclic or tetracyclic compound; these compounds may be substituted with alkyl, alkoxy or hydroxy groups; preferably methyl and/or hydroxy groups; or they may be unsubstituted. Preferably, the aliphatic polycyclic compound has from 10 to 20 carbon atoms. Preferably, the C₉-C₂₅ aliphatic polycyclic compound comprises a C₆-C₂₀ aliphatic polycyclic substituent bonded to a C₂-C₈ acyclic aliphatic substituent. Preferably, the C₂-C₈ acyclic aliphatic substituent comprises from one to four oxygen atoms; preferably at least two, preferably no more than three. Preferably, the acyclic aliphatic substituent has from three to six carbon atoms. Preferably, the acyclic aliphatic substituent has at least one ester group. Preferably, the aliphatic polycyclic substituent is bonded to the acyclic aliphatic substituent through an ester oxygen. Preferably, the aliphatic polycyclic substituent has from 8 to 12 carbon atoms. Preferably, the aliphatic polycyclic substituent is a bridged polycyclic substituent, preferably a bicyclic, tricyclic or tetracyclic substituent Preferably, the C₉-C₂₅ aliphatic polycyclic compound is a compound of formula (I) 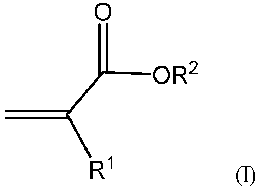 wherein R¹ is hydrogen or methyl and R² is a C₆-C₂₀ aliphatic polycyclic substituent which is unsubstituted or has an acrylate or methacrylate ester substituent Preferably, R² is a C₇-C₁₅ aliphatic polycyclic substituent, preferably R² is a C₈-C₁₂ aliphatic polycyclic substituent Preferably, R² is a bridged polycyclic substituent; preferably a bicyclic, tricyclic or tetracyclic substituent Preferred structures for R² include, e.g., adamantanes, bicyclo[2,2,1]alkanes, bicyclo[2,2,2]alkanes, bicyclo[2,1,1]alkanes; these structures may be substituted with alkyl, alkoxy or hydroxy groups; preferably methyl and/or hydroxy groups. Adamantanes and bicyclo[2,2,1]alkanes are especially preferred. Preferably, R¹ is methyl. Preferably, R² is unsubstituted.

Preferably, G in formula (II) represents 1-3 substituents, preferably 2-3. Preferably, the substituents are chosen from the group consisting of fluoro and chloro.

Preferably, the doped P2VP is prepared by mixing P2VP with the compound of formula (I) or (II) in a suitable solvent for use. Depending on the solubility of a specific dopant, a single solvent or a mixture of solvents may be used for dissolving the blended materials. Preferably, the solids content of the doped P2VP solution is in the range of 10 - 50 wt%. The solution may be cast into a free standing film on a release substrate such as release paper or continuous casting belt well known by the industry. The doped P2VP solution may also be directly applied onto a substrate (e.g., optical film or sheets or glass substrates) as a coating layer for optical property enhancement. The wet coating or films of the doped P2VP is then baked, preferably under vacuum, for a time sufficient to produce a substantially uniform film. Preferred conditions are a temperature from 50 to 100°C and a time from 5 to 30 hours.

Preferably, the amount of dopant in the doped polymer, based on the total weight of doped polymer, is greater than 5 wt%, preferably at least 8 wt%, preferably at least 10 wt%, preferably at least 12 wt%; preferably no more than 30 wt%, preferably no more than 25 wt%.

A doped P2VP according to the present invention may be directly coated onto a glass substrate of liquid crystal cells by using any suitable coating processes well known in the art. For example, the doped P2VP may be coated onto glass by dip coating, spin coating or slot die coating. A slot die coating process is more preferable with its relatively easy control of coating area, coating thickness and uniformity. If necessary, adhesion promoter may be optionally incorporated into the coating formulation to impart excellent adhesion of the coating to LC cell. The glass substrate can also be surface modified with adhesion promoters to further improve the adhesion of the doped P2VP material to glass. The preferable range of the thickness of the doped P2VP layer is less than 100 *µ*m, more preferably less than 50 *µ*m, even more preferably less than 25 *µ*m; preferably greater than 5 um, preferably greater than 10 um. When the thickness of such doped P2VP layer is greater than 100 um, it is not desirable as consumers prefer thinner electronic devices. Conversely, when the thickness of such doped P2VP layer is less than 5 um, the thin coating has limited effect to impart optical compensation to glass substrate when it is under deformation.

The preferred range of the thickness of the glass sheet is from 0.1 mm to 0.7 mm, preferably from 0.2 mm to 0.5 mm. When the thickness of the glass substrate is greater than 0.7 mm, the effect of optical coating may not be strong enough and this will also increase the thickness of the device. When the glass substrate is less than 0.1 mm, its physical rigidity becomes problematic for device fabrication.

### EXAMPLES

Three different polymers, poly(methyl methacrylate) (PMMA), poly(2-vinyl pyridine) (P2VP), and poly(4-vinyl pyridine) (P4VP), were doped with small molecule dopants to prepare the composite systems. The small molecules tested included the following: 2-naphthol (denoted 2-NP), 3-phenyl phenol (denoted 3-PP), trans-stilbene (denoted t-stilbene), 3, 4, 5 trifluorobenzoic acid (denoted TFBA), 3,4,5-trifluorophenyl acetic acid (denoted TFPAA), cyanobenzoic acid (denoted CNBA), 4-methylbiphenyl-2-carbonitrile (denoted 4M2BCN), 2-fluoro 6-phenoxybenzonitrile (denoted FPHBN), 1-hydroxyl 3-adamantyl methacrylate (denoted HAMA), 1-hydroxyl 3-adamantyl methyl methacrylate (denoted MHAMA) and isobomyl methacrylate (denoted IBOMA).

Freestanding films of the composite systems were prepared by first casting the blend formulations and the control (polymer without dopant) onto glass substrates pre-treated with a poly(dimethylsiloxane), or PDMS, brush layer. The coated samples were then baked at 75 °C under vacuum for at least 4 hours before releasing the film for optical characterization. Photoelastic measurement was carried out by measuring the in-plane film retardation while simultaneously applying a uniaxial tensile stress onto the sample specimen. Polymer films were cut into approximately 1"X3" (2.54X7.62 cm) pieces and mounted on a uniaxial tensile stretching stage attached to Exicor 150 AT birefringence measurement systems (Hinds Instruments). Optical retardation of the films was measured at a wavelength of 546 nanometers (nm) as a function of the applied force. Force was controlled manually and measured by OMEGA DFG41-RS force transducer connected to one of the sample mounting grips. Applied force was in the range of 0-15 Newtons. Photoelasticity constant or stress optic coefficient, Cp, was calculated from the slope of the stress vs. birefringence plot. Cp measurement results of different composite systems are shown in the following tables.

**Table 1. Photoelastic Property of Films made from P2VP with Different Additives**

| Ex/CompEx | Polymer | Polymer Amount (pts) | Additive | Additive Amount (pts) | Cp(x10-12Pa-1) |
|---|---|---|---|---|---|
| C1 | P2VP | 100 | none | n/a | 7.6 |
| C2 | P2VP | 90 | 3-PP | 10 | 17.4 |
| C3 | P2VP | 90 | 2-NP | 10 | 20.4 |
| C4 | P2VP | 90 | TFPAA | 10 | 6.3 |
| C5 | P2VP | 90 | CNBA | 10 | 0.94 |
| 1 | P2VP | 90 | TFBA | 10 | -23.6 |
| 2 | P2VP | 90 | HAMA | 10 | 43 |
| 3 | P2VP | 90 | MHAMA | 10 | -53.1 |
| 4 | P2VP | 90 | IBOMA | 10 | -74.7 |

| | | | | | |
|---|---|---|---|---|---|
| Films prepared from 25 wt% solution in ethyl lactate | | | | | |

**Table 2. Photoelastic Property of Films made from P4VP with Different Additives**

| Ex/CompEx | Polymer | Polymer Amount(pts) | Additive | Additive Amount (pts) | Cp(x10⁻¹²Pa⁻¹) |
|---|---|---|---|---|---|
| C6 | P4VP | 100 | none | n/a | 6.9 |
| C7 | P4VP | 90 | 3-PP | 10 | 14.8 |
| C8 | P4VP | 90 | 2-NP | 10 | 17.9 |
| C9 | P4VP | 90 | TFPAA | 10 | 7.6 |
| C10 | P4VP | 90 | CNBA | 10 | 13.8 |
| C11 | P4VP | 90 | TFBA | 10 | 10.5 |
| C12 | P4VP | 90 | HAMA | 10 | 5.9 |

| | | | | | |
|---|---|---|---|---|---|
| Films prepared from 25 wt% solution in ethyl lactate | | | | | |

**Table 3. Photoelastic Property of Films made from PMMA with Different Additives**

| Ex/CompEx | Polymer | Polymer Amount (pts) | Additive | Additive Amount (pts) | Cp(x10⁻¹²Pa⁻¹) |
|---|---|---|---|---|---|
| C13 | PMMA | 100 | none | n/a | 2.6 |
| C14 | PMMA | 90 | 3-PP | 10 | 6.6 |
| C15 | PMMA | 90 | 2-NP | 10 | 14.3 |
| C16 | PMMA | 90 | TFPAA | 10 | 0.8 |
| C17 | PMMA | 90 | CNBA | 10 | nm |
| C18 | PMMA | 90 | TFBA | 10 | 2.7 |
| C19 | PMMA | 90 | HAMA | 10 | 7.6 |
| C20 | PMMA | 90 | 4M2BCN | 10 | 7.1 |
| C21 | PMMA | 90 | t-stilbene | 10 | 6.7 |

| | | | | | |
|---|---|---|---|---|---|
| PMMA and PMMA doped with 3-PP, 2-NP, t-stilbene, 4M2BCN, HAMA were all made into a 25 wt% solution in anisole. PMMA doped with TFPAA, CNBA, TFBA were all made into a 25 wt% solution with a mixed solvent of anisole and ethyl lactate at the ratio of 70/30. | | | | | |

Further study of the P2VP-TFBA and P2VP-HAMA systems were carried out by varying the additive loading. The two small molecule additives were doped into a P2VP matrix polymer at levels of 5, 10, 15, and 20 wt% by dissolving the polymer and the additive(s) in ethyl lactate to achieve a blended solution with 25 wt% solids content Free standing films were prepared and characterized in the same manner described in the previous paragraphs. The table below shows the Cp results of the composite system as a function of additive loading. In all cases a negative Cp is achieved by doping the matrix polymer. It is also clearly shown that the magnitude of the Cp is easily tunable by varying the additive loading, where a higher dopant loading generally leads to a larger, negative Cp value of the composite system.

| Ex | Polymer | Polymer Amount (pts) | Additive | Additive Amount (pts) | Cp(x10⁻¹²Pa⁻¹) |
|---|---|---|---|---|---|
| 5 | P2VP | 95 | HAMA | 5 | -20.7 |
| 6 | P2VP | 90 | HAMA | 10 | -24.3 |
| 7 | P2VP | 85 | HAMA | 15 | -103 |
| 8 | P2VP | 80 | HAMA | 20 | -189 |
| 9 | P2VP | 95 | TFBA | 5 | -7.9 |
| 10 | P2VP | 90 | TFBA | 10 | -37.9 |
| 11 | P2VP | 85 | TFBA | 15 | -180 |
| 12 | P2VP | 80 | TFBA | 20 | -160 |

## Claims

1. Doped poly(2-vinylpyridine) which comprises 2 to 30 wt% of a dopant of formula (I) or (II) 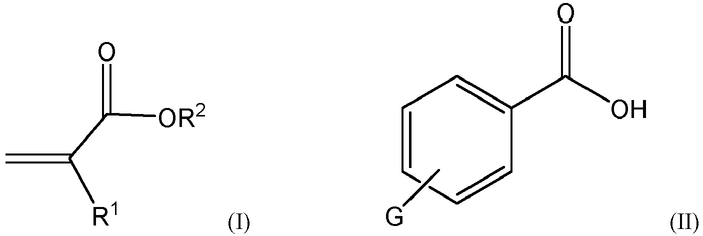 wherein R¹ is hydrogen or methyl; R² is a C₆-C₂₀ aliphatic polycyclic substituent which is unsubstituted and chosen from adamantanes, bicyclo[2,2,1]alkanes, bicyclo [2,2,2] alkanes, bicyclo[2,1,1]alkanes; and G represents 1-5 substituents selected from the group consisting of fluoro and chloro.

2. The doped poly(2-vinylpyridine) of claim 1 comprising from 10 to 30 wt% of the dopant of formula (I).

3. The doped poly(2-vinylpyridine) of claim 1 comprising 7 to 30 wt% of the dopant of formula (II).

4. The doped poly(2-vinylpyridine) of claim 1 or 3 in which G represents 1-3 substituents selected from the group consisting of fluoro and chloro.

5. The doped poly(2-vinylpyridine) of claim 4 comprising from 10 to 27 wt% of the dopant.

## Patentansprüche

1. Ein dotiertes Poly(2-vinylpyridin), das zu 2 bis 30 Gew.-% einen Dotierstoff der Formel (I) oder (II) beinhaltet 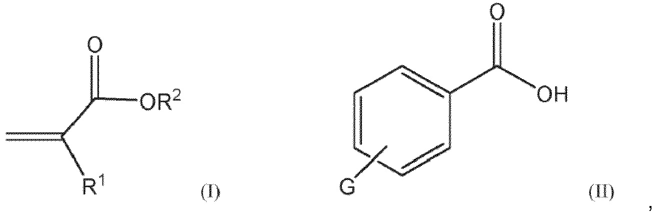 wobei R¹ Wasserstoff oder Methyl ist; R² ein aliphatischer polycyclischer C₆-C₂₀-Substituent ist, der nicht substituiert ist und aus Adamantanen, Bicyclo[2,2,1]alkanen, Bicyclo[2,2,2]alkanen, Bicyclo[2,1,1]alkanen ausgewählt ist; und G 1-5 Substituenten darstellt, die aus der Gruppe, bestehend aus Fluor und Chlor, ausgewählt sind.

2. Dotiertes Poly(2-vinylpyridin) gemäß Anspruch 1, das zu 10 bis 30 Gew.-% den Dotierstoff der Formel (I) beinhaltet.

3. Dotiertes Poly(2-vinylpyridin) gemäß Anspruch 1, das zu 7 bis 30 Gew.-% den Dotierstoff der Formel (II) beinhaltet.

4. Dotiertes Poly(2-vinylpyridin) gemäß Anspruch 1 oder 3, wobei G 1-3 Substituenten darstellt, die aus der Gruppe, bestehend aus Fluor und Chlor, ausgewählt sind.

5. Dotiertes Poly(2-vinylpyridin) gemäß Anspruch 4, das zu 10 bis 27 Gew.-% den Dotierstoff beinhaltet.

## Revendications

1. Poly(2-vinylpyridine) dopée qui comprend de 2 à 30 % en poids d'un dopant de formule (I) ou (II) 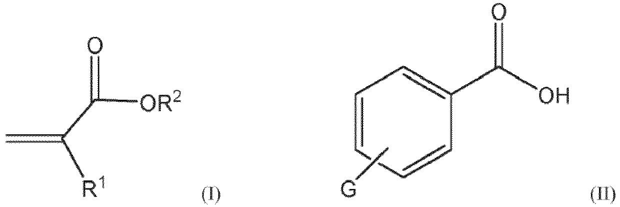 où R¹ est un hydrogène ou un méthyle ; R² est un substituant polycyclique aliphatique en C₆-C₂₀ qui est non substitué et choisi parmi des adamantanes, des bicyclo[2,2,1]alcanes, des bicyclo[2,2,2]alcanes, des bicyclo[2,1,1]alcanes ; et G représente de 1 à 5 substituants sélectionnés dans le groupe constitué de fluoro et de chloro.

2. La poly(2-vinylpyridine) dopée de la revendication 1 comprenant de 10 à 30 % en poids du dopant de formule (I).

3. La poly(2-vinylpyridine) dopée de la revendication 1 comprenant de 7 à 30 % en poids du dopant de formule (II).

4. La poly(2-vinylpyridine) dopée de la revendication 1 ou de la revendication 3 dans laquelle G représente de 1 à 3 substituants sélectionnés dans le groupe constitué de fluoro et de chloro.

5. La poly(2-vinylpyridine) dopée de la revendication 4 comprenant de 10 à 27 % en poids du dopant.
